Europäisches Patentamt

European Patent Office

Office européen des brevets

(11) Veröffentlichungsnummer: **0 181 040**
**B1**

(12) **EUROPÄISCHE PATENTSCHRIFT**

(45) Veröffentlichungstag der Patentschrift: **18.04.90**

(21) Anmeldenummer: **85201783.9**

(22) Anmeldetag: **04.11.85**

(51) Int. Cl.⁵: **C 03 B 37/012**, C 03 B 19/06,
C 03 B 20/00, C 03 B 32/00,
H 05 B 6/02

(54) **Verfahren und Vorrichtung zum Verdichten eines vorgeformten porösen Körpers aus einem Werkstoff, dessen Hauptbestandteil aus SiO2 besteht.**

(30) Priorität: **07.11.84 NL 8403380**

(43) Veröffentlichungstag der Anmeldung:
**14.05.86 Patentblatt 86/20**

(45) Bekanntmachung des Hinweises auf die
Patenterteilung:
**18.04.90 Patentblatt 90/16**

(84) Benannte Vertragsstaaten:
**DE FR GB IT NL SE**

(56) Entgegenhaltungen:
**FR-A-2 339 148**
**FR-A-2 386 004**
**US-A-4 126 436**

(73) Patentinhaber: **N.V. Philips'
Gloeilampenfabrieken
Groenewoudseweg 1
NL-5621 BA Eindhoven (NL)**

(72) Erfinder: **Meerman, Wilhelmus Cornelis Petrus
Maria
INTERNATIONAAL OCTROOIBUREAU B.V.
Prof.Holstlaan 6
NL-5656 AA Eindhoven (NL)**

(74) Vertreter: **Pennings, Johannes et al
Internationaal Octrooibureau B.V. Prof.
Holstlaan 6
NL-5656 AA Eindhoven (NL)**

**Beschreibung**

Die Erfindung bezieht sich auf ein Verfahren zum Verdichten eines vorgeformten porösen Körpers aus einem Werkstoff, dessen Hauptbestandteil aus $SiO_2$ besteht, zu einem Körper aus optisch klarem Glas, indem eine Zone hoher Temperatur durch den Körper hindurchgeführt wird und auf eine Vorrichtung zur Durchführung dieses Verfahren.

Das Verdichten poröser Körper, die hauptsächlich aus $SiO_2$ bestehen, dadurch dass diese Körper in einem Ofen erhitzt werden, ist allgemein bekannt.

Das Hauptproblem bei diesem Verfahren ist, zu vermeiden, dass in dem Glas Gasblasen beim Verdichten eingeschlossen werden. Es wurde daher bereits vorgeschlagen, unter Verwendung eines Ringofens eine Erweichungsfront durch den Körper hindurchzuführen. Dabei ist eine Erhitzung des verdichteten Körpers durch Konvektion unvermeidlich (siehe beispielsweise die deutsche veröffentlichte Patentanmeldung DE—OS 32 40 355). Auch bei Anwendung dieses Verfahrens können nach dem Verdichten noch geringfügige Gasblasen bzw. Vakuumhohlräume (Vakuole) vorhanden sein. Bei diesem Verfahren wird deswegen empfohlen, dafür zu sorgen, dass die Gasblasen mit Helium oder Wasserstoff gefüllt sind. Bei einer nachfolgenden Wärmebehandlung können diese Gase aus dem Glas ausdiffundieren. Die Vakuole müssen dabei durch eine Erhitzungsbehandlung ausgetrieben werden.

Bei diesem Verfahren besteht die Gefahr, dass das Glas zu lange bei hoher Temperatur erhitzt wird, so dass Kristallisierung des Glases auftreten kann, wenn der Hauptbestandteil aus $SiO_2$ besteht.

Die Erfindung hat nun zur Aufgabe, ein Verfahren zum Verdichten eines porösen vorgeformtem Körpers aus einem Werkstoff, dessen Hauptbestandteil aus $SiO_2$ besteht, zu schaffen, wobei das gebildete klare Glas nicht wesentlich erhitzt wird.

Unter einem Werkstoff, dessen Hauptbestandteil aus $SiO_2$ besteht, wird in diesem Zusammenhang ein Werkstoff verstanden, der einen Überschuss an $SiO_2$ und weiterhin Beimischungen (Dotierungsmittel) in einer Menge aufweist, wie sie üblich sind, um den Brechungsindex von Quarzglas um einen Prozentsatz zu verringern bzw. zu erhöhen, wie es bei Verwendung dieser Gläser in optischen Fasern üblich ist. Zugleich wird darunter ein Werkstoff verstanden, der ausschliesslich aus $SiO_2$ besteht, abgesehen von unvermeidlichen, zu vernachlässigenden Verunreinigungen.

Diese Aufgabe wird dadurch gelöst, dass die Verdichtung mit Infrarotstrahlung einer Wellenlänge kleiner als eine Wellenlänge, die von dem klaren Glas im wesentlichen absorbiert wird, durchgeführt wird und wobei Mittel vorhanden sind, die ausschliessen, das der Körper im nicht verdichteten Zustand und nach dem Verdichten durch Konvektion und durch Infrarotstrahlung mit einer Wellenlänge, die von dem klaren Glas absorbiert wird, falls eine solche Strahlung aussendenden Strahlungsquelle verwendet wird, erwärmt wird.

Bei dem erfindungsgemässen Verfahren wird die Eigenschaft ausgenutzt, dass Infrarotstrahlung mit einer Wellenlänge kleiner als die, welche von klarem Glas, dessen hauptbestandteil aus $SiO_2$ besteht, im wesentlichen absorbiert wird (kleiner als etwa 3 µm) wohl in dem porösen Körper an denjenigen Stellen absorbiert wird, wo Reflextion oder Streuung auftritt. Dadurch wird est möglich, den Körper mit einer scharf definierten, fortbewegten Zone hoher Temperatur zu verdichten, wenn die Strahlungsquelle und der poröse Körper relativ zueinander bewegt werden. Dabei erhalten die auszutreibenden Gase genügend Gelegenheit zu entweichen, so dass eine thermische Nachbehandlung des verdichteten Körpers nicht notwendig ist. Bei dem erfindungsgemässen Verfahren wird zugleich vermieden, dass das gebildete Klare Glas auf eine Art und Weise erhitzt wird, die zu Kristallisierung führen könnte.

Die Mittel, die vermeiden, dass der Körper im nicht verdichteten Zustand und nach Verdichtung durch Konvektion und durch Infrarotstrahlung mit einer Wellenlänge, die von dem klaren Glas absorbiert wird ($\lambda > 3$ µm) erwärmt wird, können beispielsweise aus einem Schirm aus Quarzglas bestehen, der sich zwischen der Strahlungsquelle und dem zu vedichtenden Körper befindet. Bei einer bevorzugten Ausführungsform des erfindungsgemässe Verfahrens wird die Verdichtung mit einer Strahlungsquelle durchgeführt, die den zu verdichtenden Körper allseitig umgibt und in einem Raum zwischen einem Innenrohr und einem Aussenrohr angeordnet ist, wobei das Innenrohr aus Quarzglas besteht und das Aussenrohr gekühlt wird.

Dadurch, dass das Innenrohr aus Quarzglas besteht, wird Infrarotstrahlung einer Wellenlänge $\lambda > 3$ µm, die gegebenenfalls von der Strahlungsquelle ausgestrahlt wird, absorbiert. Eine Temperaturerhöhung des Quarzrohres kann in diesem Fall dadurch vermieden werden, dass ein Gas durch den Raum zwischen den Rohren hindurchgeführt wird. Dadurch wird zugleich Konvektionswärme abgeführt.

Die FR—A 2 239 148 beschreibt einen Hochfrequenzofen für Benutzung in der Glasindustrie mit einem zylindrischen, induktiv geheizten, Erhitzungskörper. Zwischen dem zu erhitzenden Gegenstand und dem Erhitzungskörper kann sich ein Rohr aus Quarzglas befinden. Dieses Rohr wird jedoch nicht gekühlt.

Eine zusatzlicher Effekt wird noch dadurch erhalten, dass das Aussenrohr forciert gekühlt wird, beispielsweise mit Wasser. Das durch den Raum zwischen den Rohren hindurchgeführte Gas kann beispielsweise solcher Art sein, das es mit der Strahlungsquelle nicht chemisch reagieren kann, beispielsweise Stickstoff, Helium oder Argon oder Gemische dieser Gase. Wenn die Strahlungsquelle keine Strahlung aussendet mit

einer Wellenlänge λ > 3 μm, kann der Raum zwischen den zwei Rohren evakuiert werden. Die Strahlungsquelle kann beispielsweise aus Kohlenstoff, Graphit, Zirkonoxid, Molybdän, Wolfram und dergleichen bestehen. Der Körper der Strahlungsquelle kann induktiv oder durch direkten Stromdurchgang erhitzt werden.

Das erfindungsgemässe Verfahren eignet sich insbesondere zum Verdichten poröser Körper, deren Aussenumriss die Form eines Umdrehungskörpers hat. Die Körper können beispielsweise aus hohlen oder massiven Zylindern bestehen, aus denen bei Verdichtung Rohre bzw. massive Stäbe entstehen.

Beim Verdichten poröser Körper mit einem Aussenumriss, der die Form eines Umdrehungskörpers hat, wird vorzugswiese eine Strahlungsquelle in Form eines Hohlzylinders verwendet, der den zu verdichtenden Körper allseitig umgibt.

Trotz einer sorgfältigen Zentrierung des porösen Körpers innerhalb des zylinderförmigen Strahlungskörpers stellt es sich in der Praxis heraus, dass eine ungleichmässige Erhitzung des zu verdichtenden Körpers manchmal auftritt. Diese ungleichmässige Erhitzung kann dazu führen, dass der verdichte Körper sich verzieht. Eine ungleichmässige Erhitzung kann jedoch zu einem wesentlichen Teil dadurch vermieden werden, dass der Körper während des Verdichtungsvorganges gedreht wird. Beim Verdichten kann die Zentrierung visuell überwacht werden und zwar mit Hilfe eines Spiegels, der in einem Winkel von 45° gegenüber der Achse des zu verdichtenden Körpers fluchtend zur Achse ausserhalb der Erhitzungsrichtung angeordnet ist. Dadurch, dass der Körper sich dreht, ist es jedoch schwer visuell ermittelbar, wie eine etwaige Abweichung der Zentrierung des Körpers korrigiert werden muss.

Diese Schwierigkeit wird vermieden bei einer Ausführungsform der Erfindung, wobei eine Strahlungsquelle in Form eines den zu verdichtenden porösen Körper umgebenden Hohlzylinders verwendet wird, wobei der Körper und der Hohlzylinder derart zu einander angeordnet werden, dass die Achse des Hohlzylinder mit der Achse des Körpers zusammenfällt, der Hohlzylinder um seine Achse gedreht wird und der sich nicht drehende Körper und der Hohlzylinder in einer Richtung parallel zu dieser Achse relativ zueinander bewegt werden. Bei dieser Ausführungsform des erfindungsgemässen Verfahrens wird eine Vorrichtung verwendet, bei der die Strahlungsquelle in Form eines Hohlzylinders mit Hilfe einer HF-Spule induktiv erhitzt wird.

Beim Verdichten kann die Zentrierung des stillstehenden zu verdichtenden Körpers auf einfache Weise kontrolliert und korrigiert werden.

Bei anderen Ausführungsformen der Erfindung, bei der Prüfung und Korrektur beim Sintern stark vereinfacht werden, wird der zu verdichtende Körper von einem Führungsrohr aus Quarzglas umgeben, in dem der Körper auf Wunsch koaxial bewegt werden kann. Mit Hilfe dieses Führungsrohrs wird der zu sinternde Körper in der Mitte der Strahlungsquelle in Form eines Hohlzylinders zentriert. Bei einer Ausführungsform werden der Innendurchmesser des Rohres und der Durchmesser des zu sinterdnen Körpers derart aufeinander abgestimmt, dass infolge der Reibung zwischen dem Führungsrohr und dem zu sinternden Körper auf den Körper eine längs der Achse gerichtete Kraft ausgeübt wird bei einer relativen Bewegung des Körpers in einer Richtung, die der Richtung der Schwerkraft entgegengesetzt ist. Dabei bewegt sich also die Sinterfront durch den Körper hindurch in einer Richtung senkrecht zu und auf die Erdoberfläche gerichtet. Die axial gerichtete Kraft unterdrückt die Neigung zur Krümmung beim Sintern auf wirksame Weise. Dabei sind Korrekturen der Lage beim Sintern überflüssig geworden. Dies gilt auch wenn die Sinterfront aus irgendeinem Grund von der idealen Lage abweicht (senkrecht zur Mittellinie des zu sinternden Körpers). Ein zusätzlicher streckender Effekt lässt sich noch dadurch erreichen, dass in dem Raum über dem zu sinternden Körper ein Gasdruck über 1 Bar vorgesehen wird.

Mit dem erfindungsgemässen Verfahren können insbesondere vorgeformte poröse Körper, die mit dem sogenannten Sol-Gel-Verfahren erhalten sind, zu klaren Glaskörpern verdichtet werden. Bei dem Sol-Gel-Verfahren wird bekanntlich ein Alkoxysilan in alkoholischer Lösung durch Hinzufügen von Wasser geliert. Das erhaltene Gel wird anschliessend getrocknet und dann verdichtet (siehe beispielsweise Elektronics Letters 10. Juni 1982, Heft 18, Nr. 12, Seiten 499—500).

Der poröse Körper kann aus dotiertem $SiO_2$, beispielsweise aus $GeO_2$-dotiertem $SiO_2$, bestehen. Wird eine Dotierung verwendet, die zu Absorption von Strahlung bei einer Wellenlänge λ < 3 μm führt, so empfiehlt es sich, zwischen der Strahlungsquelle und dem porösen Körper einen Strahlungschirm aus Quarzglas anzubringen, der dieselbe Dotierung wie der poröse Körper aufweist in einer Menge, die ausreicht, um den ungewünschten Teil des Spektrums möglichst zu absorbieren. Auf diese Weise wird erreicht, dass auch in diesem Fall das klare dotierte Quarzglas, das bei der Verdichtung erhalten wird, keine oder nahezu keine Strahlung absorbiert.

Eine Verringerung des Hydroxylgruppengehalts kann bei dem erfindungsgemässen Verfahren auf wirtschaftliche Weise dadurch bewirkt werden, dass die Verdichtung in einer strömenden Gasatmosphäre erfolgt, die Chlor oder eine Chlorverbindung wie Thionylchlorid enthält.

Selbstverständlich ist es möglich, das erfindungsgemässe Verfahren in mehreren Schritten durchzuführen, wobei der poröse Körper in einem ersten Schritt nicht maximal verdichtet und in einem letzten Schritt zu klarem, porenfreiem Glas verdichtet wird. Auf diese Weise wird auch ein Glas erhalten, dessen Hydroxylgruppengehalt in der Grössenordnung von 0,01 ppm liegt, wenn das Ausgangsprodukt mit einem Verfahren erhalten worden ist, bei dem viel Wasserstoff, gegebenenfalls gebunden an $SiO_2$ vorhanden ist.

An Hand der Zeichnung werden Ausführungsformen des erfindungsgemässen Verfahrens detailliert beschrieben.

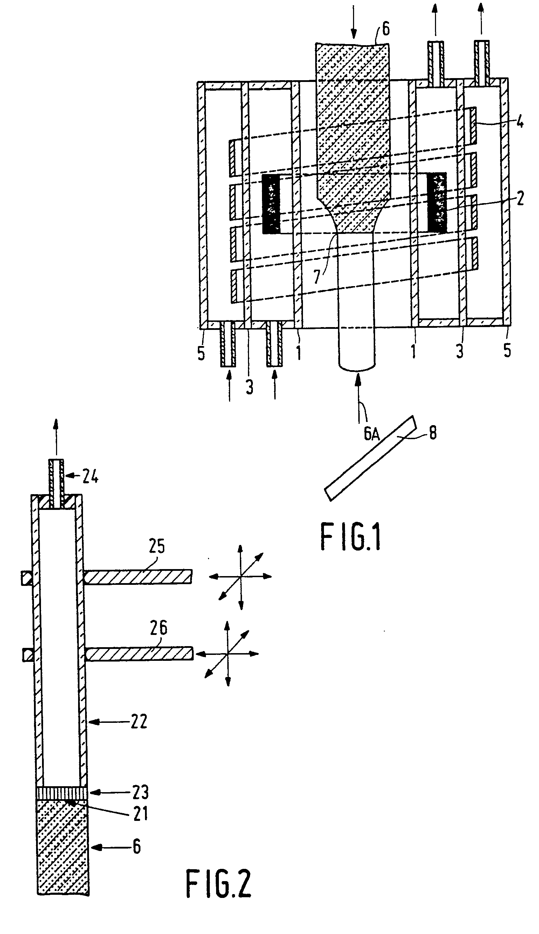

In der Zeichnung zeigt Fig. 1 in schematischer Darstellung einen Teil einer Vorrichtung zum Durchführen einer Ausführungsform des erfindungsgemässen Verfahrens.

Fig. 2 zeigt in schematischer Darstellung eine Festhalte- und Zentriervorrichtung.

Fig. 3 zeigt in schematischer Darstellung einen Teil einer Vorrichtung zum Gebrauch in einer anderen Ausführungsform eines erfindungsgemässen Verfahrens.

Die Vorrichtung weist ein Rohr 1 aus Quarzglas und eine rotierbare ringförmige Strahlungsquelle 2 aus Graphit auf. Die Strahlungsquelle 2 befindet sich in einem Raum, der durch das Rohr 1 aus Quarzglas und ein zweites Rohr 3, ebenfalls aus Quarzglas, begrenzt ist.

Die ringförmige Strahlungsquelle 2 ruht in der Praxis auf einer Unterstützung, die sich in dem Raum zwischen den Rohren 1 und 3 befindet (übersichtlichkeitshalber in der Figur nicht dargestellt) und keine oder fast keine Energie aus dem elektrischen Feld aufnimmt. Die Unterstützung wird um die Längsachse gedreht (nicht dargestellt). Durch den durch die Rohre 1 und 3 eingeschlossenen Raum wird Inertgas geführt. Damit wird beabsichtigt, einerseits das Rohr 1 zu kühlen. Die Strahlungsquelle 2 wird induktiv durch eine Spule 4 erhitzt, die sich in einem Raum zwischen dem Rohr 3 und einem Rohr 5 befindet. Durch den durch die Rohre 3 und 5 umschlossenen Raum kann ein Kühlmittel, beispielsweise demineralisiertes Wasser, zum Kühlen der Rohrwand 3 hindurchgeführt werden. Öl mit einem ausreichend hohen elektrischen Widerstand (beispielsweise Transformatoröl) kann ebenfalls als Kühlmittel verwendet werden. Ein poröser vorgeformter Körper 6 aus $SiO_2$ wird mit einer derartigen Geschwindigkeit in den von dem Quarzrohr 1 umschlossenen Raum gebracht, dass sich eine deutliche Sinterfront 7 infolge der Strahlung, die von der Strahlungsquelle 2 herrührt, bilden kann. Eine erwärmung des vorgeformten Körpers 6 oder des gesinterten Teils aus klarem Quarzglas 6a durch Konvektion ist nicht möglich, weil Konvektionswärme über den Gasstrom durch den Raum zwischen den Rohren 1 und 3 und das Kühlmittel in den Raum zwischen den Rohren 3 und 5 abgeführt wird. Der Teil 6a aus klarem Quarzglas kann auch nicht durch Strahlung mit einer Wellenlänge $\lambda > 3$ μm erhitzt werden, weil eine derartige Strahlung, falls sie von der Strahlungsquelle abgegeben wird, von dem Quarzrohr 1 absorbiert wird.

Bei der Durchführung des Verfahrens (siehe auch Fig. 2) wird der poröse vorgeformte Körper 6 zunächst mit einer Enfläche 21 versehen, die senkrecht zur Achse des Körpers 6, beispielsweise in Form eines massiven, aus enem getrockneten $SiO_2$-Gel bestehenden Zylinders, steht. Gegen die Endfläche 21 wird ein Rohr 22, beispielsweise aus Glas, gedrückt, das an dem der Endfläche 21 zugewandten Ende mit einer porösen Platte 23 versehen ist, die mit dem Rohr 22 ständig verbunden ist. Durch einen Stutzen 24 wird in dem Rohr 22 ein Vakuum erzeugt, das ausreicht, um der vorgeformte Körper 6 an der porösen Platte 23 festzuhalten. Das Rohr 22 wird in der dargestellten Ausführungsform durch zwei Arme 25 und 26 festgehalten, die unabhängig voneinander den festgehaltenen Teil des Körpers nach links und nach rechts in der Zeichenebene und nach vorne und nach hinten in der Zeicheneben bewegen können. Die beiden Arme 25 und 26 sind gekuppelt sofern es Bewegungen nach oben und nach unten in der Zeichenebene anbelangt (in der Zeichnung nicht dargestellt). Mit Hilfe der Arme 25 und 26 wird der poröse Körper 6 in das Quarzrohr 1 (Fig. 1) gebracht, um die Verdichtungsfront 7 durch den Körper 6 zu bewegen. Durch einen Spiegel 8 wird die Lage des Körpers 6 und des verdichteten Teils 6a beim Verdichten überprüft. Mit Hilfe der Arme 25 und 26 wird diese Lage nötigenfalls korrigiert.

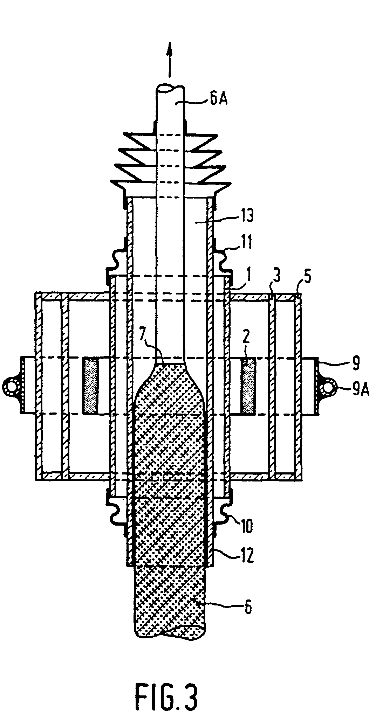

Anhand der Fig. 3 wird eine weitere Ausführungsform beschrieben. Fig. 3 zeigt im Schnitt und schematisch einen Teil einer Vorrichtung zum Sintern eines vorgeformten porösen Körpers. Gleiche Bezugzeichen haben dieselbe Bedeutung wie in den vorhergehenden Figuren 1 und 2. In einem eng anliegenden Rohr 12 aus Quarzglas, das gegenüber der ringförmigen Strahlungsquelle 2 ausgerichtet werden kann, befindet sich der poröse Körper 6 aus Silikagel. Durch den Raum zwischen dem Quarzglasrohr 12 und dem Quarzglasrohr 1 wird ein geeignetes Kühlgas wie Helium oder trockner Stickstoff hindruchgeführt. Durch den Raum zwischen den Quarzglasrohren 1 und 3 wird ein geeignetes Schutzgas hindurchgeführt, das das Material der Strahlungsquelle 2 gegen Oxidation schützt, z.B. trockner Stickstoff. Durch den Raum zwischen den Quarzglasrohren 3 und 5 wird zur Kühlung Wasser hindurchgeführt, ebenso wie durch das Kupferrohr 9a. Der Raum zwischen den Rohren 1 und 12 wird mit biegsamen Dichtungen 10 und 11 aus Silikonkautschuk abgedichtet. Im Gebrauch wird durch die HF-Spule aus nur einer Windung HF-Strom hindurchgeführt (Frequenz 500 kHz) und die Strahlungsquelle 2 mit einer Drehzahl von 200 U/Min. gedreht. Beim Sintern entsteht auch in dieser Ausführungsform eine stabile scharfe Sinterfront 7, die jedoch nicht unbedingterweise senkrecht zu der Mittellinie des zu sinternden Körpers 6 steht. Dies beeinträchtigt jedoch nicht die Geradheit des gesinterten Teils aus klarem Quarglas 6A. Dies ist die Folge der Kraft, die notwendig ist um die Reibung zwischen dem zu sinternden Körper 6 und dem Rohr 12 zu überwinden. Diese Kraft wird dadurch ausgeübt, dass der gesinterte Teil 6A aus der Vorrichtung gezogen wird und zwar in einer Richtung, die der Richtung der Schwerkraft entgegengesetzt ist. Die Tatsache, dass der gesinterte Teil 6A gerade bleibt, wird noch gefordert, wenn in dem Raum 13 ein Gasdruck über dem atmosphärischen Druck beibehalten wird (z.B. mit Stickstoff, Druck zwischen 1 und 2 bar). Es ist auch möglich, die Dichtungen 10 und 11 starr auszubilden und die Zentrierung des Körpers 6 gegenüber der Strahlungsquelle 2 dadurch zu bewirken, dass die Lage der Strahlungsquelle 2 gegenüber der Mittellinie des Körpers 6 geändert wird. Bei dieser Lösung können poröse Körper mit einem Durchmesser von 80 bis 100 mm und mit einer Länge von 1 bis 2 m auf relativ einfache Weise zu einem Festkörper, einem festen Rohr bzw. Stab verdichtet werden.

Bei einer anderen Ausführungsform der Erfindung wird der poröse Körper 6 nicht relativ zu dem eng anliegenden Rohr 12 bewegt. Bei dieser Ausführungsform werden der poröse Körper 6 und das Rohr 12 zusammen also mit gleicher Geschwindigkeit durch die Strahlungsquelle 2 hindurch bewegt. Auch in diesem Falle wird während des Sinterns keine Krümmung des gesinterten Körpers auftreten. Rohr 12 kann hierbei ein Rohr aus Quarzglas sein in dem der poröse Körper 6 durch Gelieren eines geeigneten Ausgangsmaterials hergestellt worden ist. Bei den Ausführungsformen in der ein Führungsrohr verwendet wird wird noch der zusätzliche Vorteil erhalten dass auch wenn die Achse des porösen Körpers nicht exakt zentriert worden ist innerhalb der ringförmigen Strahlungsquelle 2 keine krümmung während des Sinterns auftreten wird nachdem die Sinterfront 7 eine stabile Lage angenommen hat.

**Patentansprüche**

1. Verfahren zum Verdichten eines vorgeformten porösen Körpers (6) aus einem Werkstoff, dessen Hauptbestandteil aus SiO$_2$ besteht, zu einem Körper aus optich klarem Glas (6A) in dem eine Zone hoher Temperatur durch den Körper (6) hindurchgeführt wird dadurch gekennzeichnet, dass die Verdichtung mit IR-Strahlung einer Wellenlänge kleiner als eine Wellenlänge, die von dem klaren Glas im wesentlichen absorbiert wird, durchgeführt wird und wobei Mittel vorgeshen sind, die vermeiden, dass der Körper im nicht verdichteten Zustand oder nach dem Verdichten durch Konvektion und durch IR-Strahlung mit einer Wellenlänge, die von dem klaren Glas absorbiert wird, falls eine solche Strahlung aussendenden Strahlungsquelle verwendet wird, erwärmt wird.

2. Verfahren nach Anspruch 1, dadurch gekennzeichnet dass der poröse Körper (6) zonenweise mit einer Strahlung mit einer Wellenlänge von weniger als etwa 3 µm bestrahlt wird.

3. Verfahren nach Anspruch 1, dadurch gekennzeichnet dass die Verdichtung durchgeführt wird, während sich zwischen dem zu verdichtenden Körper (6) und der Strahlungsquelle (2) ein Schirm (1) aus Quarzglas befindet.

4. Verfahren nach Anspruch 3, dadurch gekennzeichnet dass die Verdichtung mit einer Strahlungsquelle (2) durchgeführt wird, die sich in einem Raum befindet, durch den ein Inertgas hindurchgeführt wird oder der evakuiert ist.

5. Verfahren nach Anspruch 4, dadurch gekennzeichnet, dass die von dem zu verdichtenden Körper (6) abgewandte Wand (3) des Raumes, in dem sich die Strahlungsquelle befindet, forciert gekühlt wird.

6. Verfahren nach Anspruch 1, dadurch gekennzeichnet, dass der poröse Körper (6) beim Verdichten um eine Achse senkrecht zu der Zone hoher Temperatur gedreht wird.

7. Verfahren nach Anspruch 1, dadurch gekennzeichnet, dass der poröse Körper (6) unter Anwendung einer Strahlungsquelle in Form eines den zu verdichtenden Körper (6) umgebenden Hohlzylinders verdichtet wird, wobei der Körper (6) und der Hohlzylinder (2) derart zueinander angeordnet werden, dass di Achse des Hohlzylinders (2) mit der Achse des Körpers (6) zusammenfällt, der Hohlzylinder (2) um seine Achse gedreht wird und der sich nicht drehende Körper (6) und der Hohlzylinder (2) gegeneinander in einer Richtung parallel zu dieser Achse bewegt werden.

8. Vorrichtung zum Verdichten poröser, im wesentlichen aus SiO$_2$ bestehender, zylinderförmiger Körper (6) mit einer ringförmigen Hitzequelle deren Achse mit der Achse der zu verdichtenden Körper (6) zusammenfällt und relativ zu dem zu verdichtenden Körper in längsrichtung bewegt werden kann um eine Zone hoher Temperatur durch den Körper hindurchzuführen, dadurch gekennzeichnet, dass die Vorrichtung als Hitzequelle einen Strahlungskörper (2) in Form eines Hohlzylinders und Mitteln um den Strahlungskörper (2) induktiv zu erhitzen und um die gemeinschaftliche Achse zu drehen, aufweist, wobei sich in der Vorrichtung zwischen dem Strahlungskörper (2) und dem zu verdichtenden Körper (6) ein rohrförmiger Schirm (1) aus Quarzglas befindet und Mitteln anwesend sind um den Schirm (1) mittels eines Gasstroms zu kühlen.

9. Verfahren nach Anspruch 7, dadurch gekennzeichnet dass der zu verdichtenden Körper (6) sich in einem Führungsrohr (12) aus Quarzglas befindet, in dem der Körper (6) koaxiaal bewegt werden kann und das innerhalb des Schirms (1) aus Quarzglas in der Mitte des zylinderförmigen Strahlungskörpers (2) angeordnet ist, wobei die Sinterfront derart durch den Körper (6) hindurch bewegt wird, dass die Bewegungsrichtung zu der Erdoberfläche gerichtet ist.

10. Verfahren nach Anspruch 7, dadurch gekennzeichnet dass in dem freien Raum über dem zu sinternden Körper (6) ein Druck über 1 bar vorgesehen wird.

11. Vorrichtung nach Anspruch 8, dadurch gekennzeichnet dass der Strahlungskörper (2) aus einem Hohlzylinder aus Kohlenstoff besteht.

12. Vorrichtung nach Anspruch 8, dadurch gekennzeichnet, dass die Vorrichtung mit einer den Strahlungskörper (2) umgebenden HF-Spule 4 bzw. 9 wersehen ist.

13. Verfahren nach Anspruch 7, dadurch gekennzeichnet dass der zu verdichtende Körper (6) sich in einem Führungsrohr (12) aus Quarzglas befindet mit dem der Körper (2) zusammen bewegt wird und dass innerhalb des Schirms (1) aus Quarzglas in der Mitte des zylinderförmigen Strahlungskörpers 2 angeordnet ist, wobei die Sinterfront durch den Körper 2 hindurchbewegt wird.

**Revendications**

1. Procédé pour densifier un corps poreux préformé 6 en un matériau dont le composant principal est constitué par SiO₂ en un corps en verre optiquement clair 6A par passage d'une zone de température élevée à travers le corps 6, caractérisé en ce que la densification s'éffectue à l'aide de rayonnement infra-rouge d'une longueur d'onde inférieure à une longueur d'onde absorbée essentiellement par le verre clair, alors que des moyens sont prévus pour empêcher que le corps ne soit chauffé à l'état non desifié et après densification par convexion et par rayonnement infra-rouge avec une longueur d'onde absorbée par le verre clair dans le cas d'utilisation d'une source de rayonnement émettant un tel rayonnement.

2. Procédé selon la revendication 1, caractérisé en ce que le corps poreux 6 est irradié suivant des zones avec un rayonnement d'une longueur d'onde inférieure à environ 3 μm.

3. Procédé selon la revendication 1, caractérisé en ce que la densification est effectuée tandis qu'entre le corps à densifier 6 et la source de rayonnement 12 se trouve un écran 1 en verre de quartz.

4. Procédé selon la revendication 3, caractérisé en ce que la densification est effectuée avec une source de rayonnement 2 qui se trouve dans un espace que traverse un gaz inerte ou qui est vidé.

5. Procédé selon la revendication 4, caractérisé en ce que la paroi 3 de l'espace opposé au corps à densifier 6 et contenant la source de rayonnement est refroidie de façon forcée.

6. Procédé selon la revendication 1, caractérisé en ce que lors de la densification, le corps poreux 6 est porté à rotation autour d'un axe perpendiculaire à la zone de température élevée.

7. Procédé selon la revendication 1, caractérisé en ce que le corps poreux 6 est densifié à l'aide d'une source de rayonnement sous forme d'un cylindre creux entourant le corps à densifier 6, le corps 6 et le cylindre creux 12 étant disposés l'un par rapport à l'autre de façon que l'axe du cylindre creux 2 coïncide avec l'axe du corps 6, le cylindre creux 2 est porté à rotation autour de son axe et le corps non porté à rotation 6 et le cylindre creux 12 sont déplacés dans des sens opposés parallèlement à cet axe.

8. Dispositif pour la densification de corps cylindriques essentiellement en SiO₂ 6 comportant une source de chaleur annulaire dont l'axe coïncide avec l'axe du corps à densifier 6 et peut être déplacé par rapport au corps à densifier dans la direction longitudinale afin qu'une zone de température élevée traverse le corps, caractérisé en ce que comme source de chaleur, le dispositif comporte un corps de rayonnement 2 sous forme d'une cylindre creux et des moyens pour chauffer par voie inductive le corps de rayonnement 2 et pour tourner ce dernier autour de l'axe commun, un écran tubulaire 1 en verre de quartz étant disposé dans le dispositif entre le corps de rayonnement 2 et le corps à densifier 6 et des moyens sont présents afin de refroidir l'écan 1 à l'aide d'un courant de gaz.

9. Procédé selon la revendication 7, caractérisé en ce que le corps à densifier 6 se trouve dans un tube de guidage 12 dans lequel le corps 6 peut être déplacé coaxialement et qui est disposé dans l'écran 1 en verre de quartz au centre du corps de rayonnement cylindrique 2 le front de frittage se déplaçant à travers le corps 6 de façon que la direction de déplacement soit dirigée vers la surface de la terre.

10. Procédé selon la revendication 7, caractérisé en ce que dans l'espace libre au-dessus du corps à fritter 6 est réalisée une pression supérieure à 1 bar.

11. Procédé selon la revendication 8, caractérisé en ce que le corps de rayonnement 2 est constitué par un cylindre creux en carbone.

12. Procédé selon la revendication 8, caractérisé en ce que le dispositif est muni d'une bobine de haute fréquence 4 respectivement 9 qui entoure le corps de rayonnement 2.

13. Procédé selon la revendication 7, caractérisé en ce que le corps à densifier 6 se trouve dans un tube de guidage 12 en verre de quartz avec lequel se déplace le corps 2 et est disposé dans l'écran 1 en verre de quartz au centre du corps de rayonnement cylindrique 2, le front de frittage se déplaçant a travers le corps 2.

**Claims**

1. A method of densifying a preformed porous body (6) of a material the main constituent of which is SiO₂ to form a body of an optically transparent glass (6a) by passing a zone of high temperature through the body (6), characterized in that densification is carried out by means of infrared radiation having a wavelength smaller than a wavelength which is absorbed essentially by the transparent glass, means being provided to prevent the body in the non-densified condition or after densification from being heated by convection and infrared radiation having a wavelength which is absorbed by the transparent glass, if a radiation source emitting such radiation is used.

2. A method as claimed in Claim 1, characterized in that the porous body (6) is exposed zone-wise to radiation having a wavelength smaller than approximately 3 μm.

3. A method as claimed in Claim 1, characterized in that densification is carried out while a screen (1) of quartz glass is present between the body (6) to be densified and the radiation source (2).

4. A method as claimed in Claim 3, characterized in that densification is carried out by means of a radiation source (2) which is present in a space through which an inert gas is passed or which is evacuated.

5. A method as claimed in Claim 4, characterized in that the wall (3) of the space remote from the body (6) to be densified, in which space the radiation source is present, is force-cooled.

6. A method as claimed in Claim 1, characterized in that during the densification the porous body (6) is rotated about an axis perpendicularly to the zone of high temperature.

7. A method as claimed in Claim 1, characterized in that the porous body (6) is densified while using a radiation source in the form of a hollow cylinder surrounding the body (6) to be densified, the body (6) and the hollow cylinder (2) being positioned relative to each other in such manner that the axis of the hollow cylinder (2) coincides with the axis of the body (6), the hollow cylinder (2) being rotated about its axis and the non-rotating body and the hollow cylinder being moved relative to each other in a direction parallel to said axis.

8. A device for densifying porous cylindrical bodies (6) consisting essentially of $SiO_2$ by means of an annular heat source whose axis coincides with that of the body (6) to be densified and can be moved longitudinally relative to the body to be densified in order to pass a high-temperature zone through the body, characterized in that as a heat source the device comprises a radiation member (2) in the form of a hollow cylinder and means of inductively heating the radiation member (2) and rotating it about the common axis, a tubular screen (1) of quartz glass being present in the device between the radiation member (2) and the body (6) to be densified, and means being present to cool the screen (1) by means of a gas flow.

9. A method as claimed in Claim 7, characterized in that the body (6) to be densified is present in a guide tube (12) of quartz glass in which the body (6) can be moved coaxially and which is accommodated within the screen (1) of quartz glass in the centre of the cylindrical source of radiation (2), the sintering front being moved through the body (6) in such a manner that the direction of movement is directed towards the earth's surface.

10. A method as claimed in Claim 7, characterized in that a pressure exceeding 1 bar is produced in the free space above the body (6) to be sintered.

11. A method as claimed in Claim 8, characterized in that the radiation member (2) is a hollow cylinder of carbon.

12. A method as claimed in Claim 8, characterized in that the device comprises an RF coil 4 or 9 surrounding the radiation member (2).

13. A method as claimed in Claim 7, characterized in that the body (6) to be densified is present in a guide tube (12) of quartz glass which is moved together with the member (2), and which is arranged within the screen (1) of quartz glass in the centre of the cylindrical radiation member (2), the sintering front being moved through the member (2).

FIG.1

FIG.2

1

FIG.3